Europäisches Patentamt

European Patent Office

Office européen des brevets

(19)

(11) Numéro de publication : **0 480 830 A1**

# (12) DEMANDE DE BREVET EUROPEEN

(21) Numéro de dépôt : **91402696.8**

(51) Int. Cl.⁵ : **B60Q 1/44**

(22) Date de dépôt : **09.10.91**

(30) Priorité : **09.10.90 FR 9012400**

(43) Date de publication de la demande :
**15.04.92 Bulletin 92/16**

(84) Etats contractants désignés :
**DE ES GB IT**

(71) Demandeur : **REGIE NATIONALE DES USINES
RENAULT S.A.
34, Quai du Point du Jour
F-92109 Boulogne Billancourt Cédex (FR)**

(72) Inventeur : **Leorat, François
98, Boulevard de la Reine
F-78000 Versailles (FR)**

(54) **Procédé et dispositif d'allumage des feux stop d'un véhicule automobile au lâcher de l'accélérateur.**

(57) Procédé d'allumage des feux stop (1) d'un véhicule automobile au lâcher de l'accélérateur, selon lequel l'alimentation du circuit d'allumage des feux stop (1) peut être assurée par la fermeture d'un contact auxiliaire (2), monté parallèlement au contact principal (3) et actionné par la pédale de frein, caractérisé en ce que la fermeture du contact auxiliaire (2) est commandée par un calculateur (4) traitant la mesure $\alpha_c$ de l'ouverture du papillon d'admission d'essence, ou de la position du levier de commande de la pompe d'injection Diesel.

FIG. 2

EP 0 480 830 A1

La présente invention se rapporte a un procédé et a un dispositif d'allumage des feux stop d'un véhicule automobile permettant de signaler les ralentissements du véhicule aux autres usagers de la route. Ce procédé peut être mis en oeuvre sur tous les types de véhicules routiers équipés d'un moteur a combustion interne. Son action est complémentaire a celle de l'allumage des mêmes feux stop par enfoncement de la pédale de frein.

On connait déja certains dispositifs permettant l'allumage des feux stop, avant que le conducteur n'appuie sur la pédale de frein. La publication FR-2.225.007 décrit notamment un "avertisseur lumineux de ralenti a l'arrière des véhicules automobiles". Cet avertisseur, actionné automatiquement lorsqu'aucune pression n'est exercée sur la commande d'accélération, assure l'allumage d'une ampoule située a l'arrière du véhicule, derrière un cabochon translucide de couleur différente de celui des feux de freinage. La publication EP-0.219.858 illustre un autre type de procédé, selon lequel les feux de freinage peuvent être allumés en réponse a la déccélération du véhicule. Cette commande entre en action préalablement ou parallèlement a l'enfoncement de la pédale de frein. Le dispositif utilisé comporte un soufflet monté en arrière de la pédale d'accélérateur. Lorsque celle-ci est relâchée brutalement, la dépression créée dans le soufflet soulève momentanément une lame de métal fermant le circuit électrique d'allumage des feux stop. Cette même publication décrit en variante un dispositif assurant l'allumage des feux stop lors du relâchement brusque de la pédale d'accélérateur grâce a l'apparition, dans le circuit d'allumage, d'un courant induit par le mouvement rapide d'un moyeu magnétique a l'intérieur d'une bobine.

La sécurité des usagers exige que l'allumage des feux stop en l'absence de freinage ne survienne que lors de décélérations importantes. Il est avantageux que la valeur de la décélération en dessous de laquelle les feux ne doivent pas s'allumer puisse, être facilement fixée et imposée au système. Dans ce but, l'invention propose un procédé et un dispositif d'allumage des feux stop d'un véhicule au lâcher de l'accélérateur, dont la sensibilité peut être établie avec précision et fiabilité.

Selon un mode de réalisation de l'invention, l'alimentation du circuit d'allumage des feux stop peut être assurée par la fermeture d'un contact auxiliaire, monté parallèlement au contact principal actionné par la pédale de frein. La fermeture du contact auxiliaire est commandée par un calculateur traitant la mesure $\alpha_c$ de l'ouverture du papillon d'admission d'essence, ou de la position du levier de commande de la pompe d'injection Diesel.

Selon un mode de réalisation de l'invention, l'ouverture du papillon d'admission d'essence, ou la position du levier de commande de la pompe d'injec-tion Diesel $\alpha_c$ est mesurée par un potentiomètre.

Selon un mode de réalisation de l'invention, le calculateur calcule la dérivée $\dot{\alpha}_c$ de l'ouverture du papillon d'admission d'essence, ou de la position du levier de commande de la pompe d'injection Diesel .

Selon un mode de réalisation de l'invention, la dérivée $\dot{\alpha}_c$ de l'ouverture du papillon d'admission d'essence, ou de la position du levier de commande de la pompe d'injection Diesel $\dot{\alpha}_c$ est comparée a une valeur seuil $S\dot{\alpha}_c$ préétablie.

Selon un mode de réalisation de l'invention, le calculateur délivre un signal logique égal a un actionnant un relais qui ferme le contact auxiliaire, lorsque la valeur opposée de la dérivée $\dot{\alpha}_c$ est supérieure a une valeur seuil de la dérivée, $S\dot{\alpha}_c$, préétablie.

Selon un mode de réalisation de l'invention, le signal logique revient automatiquement a zéro, coupant ainsi l'alimentation du relais, a l'issue d'une durée d'activation tA préétablie, ou si la valeur de l'ouverture $\alpha_c$ devient supérieure a une valeur seuil d'ouverture $S \alpha_c$ également préétablie, avant l'expiration de la durée d'activation tA.

Selon un mode de réalisation de l'invention, le dispositif prévu pour sa mise en oeuvre comporte un circuit d'allumage alimenté par la batterie du véhicule, présentant un contact de fermeture principal actionné par la pédale de frein et un contact de fermeture auxiliaire actionné par un relais, un calculateur délivrant un signal logique de commande du relais après traitement de la mesure de l'ouverture $\alpha_c$ du papillon d'admission d'essence, ou de la position du levier de commande de la pompe d'injection Diesel, et un potentiomètre mesurant la valeur $\alpha_c$ et transmettant cette mesure au calculateur.

Selon un mode de réalisation de l'invention, le potentiomètre appartient au dispositif d'injection du moteur ou à la boîte de vitesses automatique.

Selon un mode de réalisation de l'invention, le calculateur appartient au dispositif d'injection du moteur ou à la boîte de vitesses automatique.

D'autres caractéristiques et avantages de l'invention apparaitront a la lecture de la description qui va suivre d'un mode de réalisation de l'invention en se référant aux dessins annexés sur lesquels :

    – la figure 1 est un schéma de présentation de l'invention ;

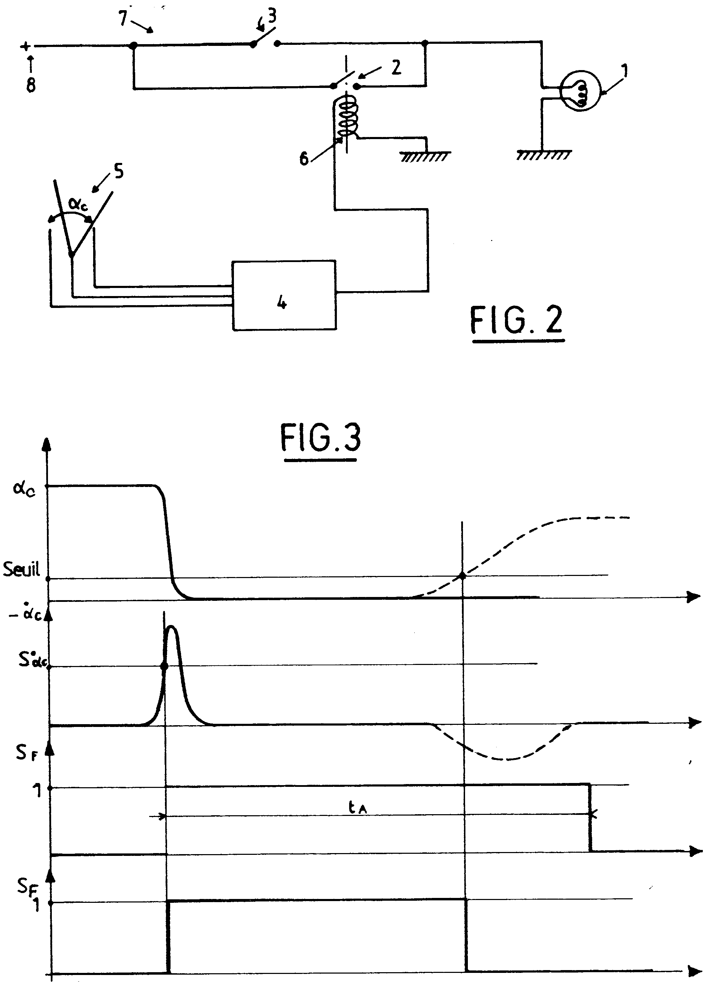

    – la figure 2 est un schéma du dispositif de l'invention;

    – la figure 3 reproduit les courbes de variation de l'ouverture $\alpha_c$ du papillon d'admission, de la déri-vée $\dot{\alpha}_c$ de l'ouverture du papillon d'admission, et du signal logique en fonction de temps.

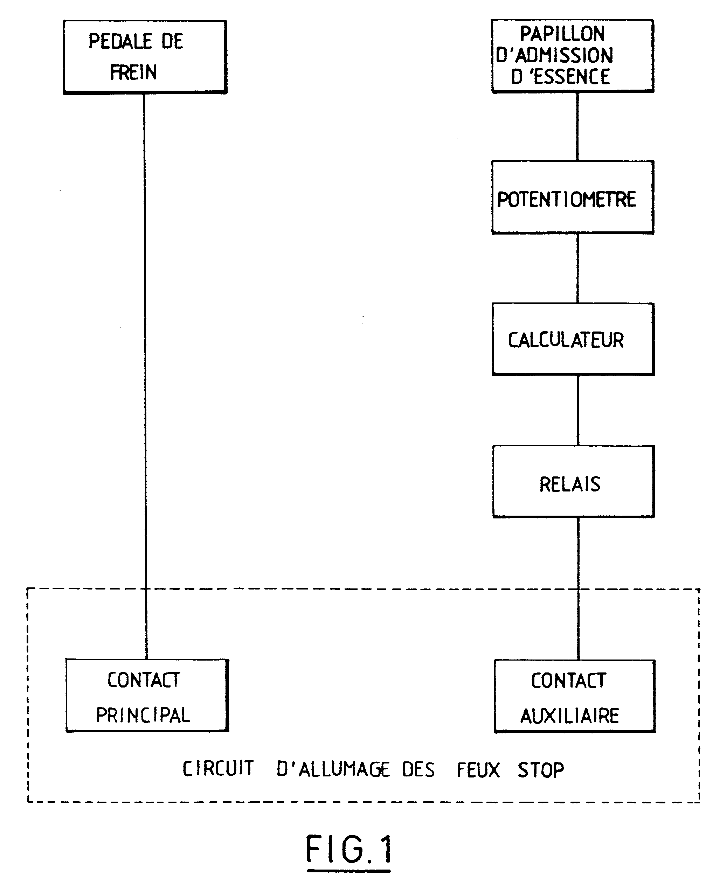

Le dispositif représenté sur la figure 1 comporte un circuit d'allumage des feux stop (1) alimenté par la batterie du véhicule, présentant un contacteur principal (3) actionné par la pédale de frein et un contacteur auxiliaire (2) actionné par un relais (6). Le relais (6) est raccordé à un calculateur (4) lui-même en liaison avec un potentiomètre (5) monté sur le papillon d'admission d'essence du moteur, ou indiquant la position du levier de commande de la pompe d'injection Diesel. Le potentiomètre (5) de mesure de l'ouverture $\alpha_c$ peut avantageusement être celui existant par ailleurs sur les moteurs à injection ou les boîtes de vitesses automatiques. De la même façon, le traitement de la valeur d'ouverture $\alpha_c$ mesurée par le potentiomètre peut avantageusement être assuré par le calculateur du dispositif d'injection ou de la boîte de vitesses automatique du véhicule.

A chaque instant, la dérivée $\dot{\alpha}_c$ de l'ouverture instantanée, convenablement filtrée des bruits parasites, est calculée. Cette dérivée $\dot{\alpha}_c$ est comparée a une valeur seuil de variation instantanée de l'ouverture, $S\dot{\alpha}_c$. Cette valeur seuil $S\dot{\alpha}_c$, préétablie, détermine une limite en deça de laquelle l'allumage des feux stop (1) n'est pas déclenché. Lors du lâcher de l'accélérateur la dérivée $\dot{\alpha}_c$ est négative puisque l'ouverture $\alpha_c$ diminue. Le calculateur (4) délivre un signal logique, de valeur un, qui commande le relais (6) pour la fermeture du contact auxiliaire (1). Le signal logique reprend une valeur égale a zéro, entraînant la coupure du circuit a l'issue d'une durée d'activation préétablie tA. Le signal logique peut également s'annuler avant l'expiration de la durée tA, lorsque l'ouverture redevient supérieure a une valeur seuil $S\alpha_c$

Le procédé faisant l'objet de l'invention ne nécessite l'installation d'aucun dispositif mécanique, pneumatique ou électrique lié a la pédale d'accélérateur. Il peut être mis en oeuvre en utilisant les possibilités de calcul des dispositifs existant sur le véhicule, tels le calculateur d'injection ou de boîte de vitesses.

## Revendications

**1°)** Procédé d'allumage des feux stop (1) d'un véhicule automobile au lâcher de l'accélérateur, selon lequel l'alimentation du circuit d'allumage des feux stop (1) peut être assurée par la fermeture d'un contact auxiliaire (2), monté parallèlement au contact principal (3) et actionné par la pédale de frein, caractérisé en ce que la fermeture du contact auxiliaire (2) est commandée par un calculateur (4) traitant la mesure de l'ouverture $\alpha_c$ du papillon d'admission d'essence, ou de la position du levier de commande de la pompe d'injection Diesel.

**2°)** Procédé d'allumage des feux stop selon la revendication 1, caractérisé en ce que l'ouverture du papillon d'admission d'essence, ou la position du levier de commande de la pompe d'injection Diesel $\alpha_c$ est mesurée par un potentiomètre (5).

**3°)** Procédé d'allumage des feux stop selon la revendication 1, caractérisé en ce que le calculateur (4) calcule la dérivée $\dot{\alpha}_c$ de l'ouverture du papillon d'admission d'essence, ou de la position du levier de commande de la pompe d'injection Diesel $\dot{\alpha}_c$.

**4°)** Procédé d'allumage des feux stop selon la revendication 3, caractérisé en ce que le calculateur (4) délivre un signal logique égal à un, commandant un relais (6) qui ferme le contact auxiliaire (2) lorsque la valeur opposée de la dérivée est supérieure à une valeur seuil $S\dot{\alpha}_c$ préétablie.

**5°)** Procédé d'allumage des feux stop selon la revendication 4, caractérisé en ce que le signal logique revient automatiquement à zéro, coupant ainsi l'alimentation du relais (6) à l'issue d'une durée d'activation tA préétablie ou si la valeur de l'ouverture $\alpha_c$ devient supérieure à une valeur seuil d'ouverture $S\alpha_c$ également préétablie, avant l'expiration de la durée d'activation tA.

**6°)** Dispositif d'allumage des feux stop (1) pour la mise en oeuvre du procédé selon l'une quelconque des revendications précédentes, caractérisé en ce qu'il comporte un circuit d'allumage (7) alimenté par la batterie (8) du véhicule présentant un contact (3) de fermeture principal actionné par la pédale de frein et un contact auxiliaire (2) actionné par un relais (6), un calculateur (4) délivrant un signal logique de commande du relais (6) après traitement de la mesure $\alpha_c$ de l'ouverture du papillon d'admission d'essence, ou de la position du levier de commande de la pompe d'injection Diesel et un potentiomète (5) mesurant la valeur $\alpha_c$, et transmettant la valeur mesurée au calculateur (4).

**7°)** Dispositif d'allumage des feux stop selon la revendication 6, caractérisé en ce que le potentiomètre (5) appartient au dispositif d'injection du moteur ou à la boîte de vitesses automatique.

**8°)** Dispositif d'allumage des feux stop selon la revendication 6, caractérisé en ce que le calculateur (4) appartient au dispositif d'injection du moteur ou à la boîte de vitesses automatique.

PEDALE DE
FREIN

PAPILLON
D'ADMISSION
D'ESSENCE

POTENTIOMETRE

CALCULATEUR

RELAIS

CONTACT
PRINCIPAL

CONTACT
AUXILIAIRE

CIRCUIT  D'ALLUMAGE DES  FEUX  STOP

FIG.1

FIG. 2

FIG.3

Office européen
des brevets

**RAPPORT DE RECHERCHE EUROPEENNE**

Numero de la demande

EP    91 40 2696

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | FR-A-2 640 918 (ROUCHE)<br>* abrégé; figures 1,4 *<br>--- | 1,2,6 | B60Q1/44 |
| A | DE-A-3 811 324 (LIN)<br>* abrégé; figures 1,3 *<br>--- | 5,6 | |
| A | AT-C-320 449 (SATTLER)<br>* le document en entier *<br>----- | 3,4 | |

DOMAINES TECHNIQUES RECHERCHES (Int. Cl.5)

B60Q

Le présent rapport a été établi pour toutes les revendications

| Lieu de la recherche | Date d'achèvement de la recherche | Examinateur |
|---|---|---|
| LA HAYE | 09 JANVIER 1992 | Onillon  C.G.A. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)